Europäisches Patentamt

(19) European Patent Office

Office européen des brevets

(11) Publication number: **0 198 804**
**A2**

(12) # EUROPEAN PATENT APPLICATION

(21) Application number: **86830090.6**

(22) Date of filing: **16.04.86**

(51) Int. Cl.⁴: **A 23 L 1/24,** A 23 D 5/00

(30) Priority: **17.04.85 IT 2036785**

(43) Date of publication of application: **22.10.86**
**Bulletin 86/43**

(84) Designated Contracting States: **BE DE FR GB**

(71) Applicant: **RBS PHARMA (ROGER BELLON SCHOUM)**
**S.p.A., Via Kuliscioff, 6, Milano (IT)**

(72) Inventor: **Turchetto, Edoardo, Via dello Sterlino, 6,**
**Bologna (IT)**

(74) Representative: **Aimi, Luciano et al, c/o Società Italiana**
**Brevetti S.p.A. Via Carducci 8, I-20123 Milano (IT)**

(54) **New dietetic composition and method for preparing same.**

㊸ A dietetic composition based on linseed oil and soya-bean oil is described, by which the optimum requirements of the α-linolenic essential fatty acid and a supplement of the quantity of the linoleic essential fatty acid are assured to the organism. The α-linolenic acid, which is metabolized into structures of great importance for vital organic functions, is very scarce or lacking in the normal alimentary diet. A suitable method for obtaining and treating linseed oil is described, which makes it practically tasteless and, therefore, fit for alimentary use.

## "NEW DIETETIC COMPOSITION AND METHOD FOR PREPARING SAME"

The objects of this invention are a new dietetic composition based on vegetable oils and the process for its preparation.

More particularly, the dietetic composition of the invention provides the organism with some of the essential fatty acids (EFA), i.e. some of those polyunsaturated fatty acids, which are not synthetized by the organism but are to be taken through alimentation and which perform in the organism important plastic vital functions of membrane and as precursors of biostructures which are specific for the modulations of the living system.

It is known that the unsaturated fatty acids, which are present in the human body, are subdivided into the four families having as their parent compounds the palmitoleic acid, the oleic acid, the linoleic acid and the α-linolenic acid: the characteristic feature of these four families is the terminal part of the carbon chain on the opposite side to carboxyl, up to the first carbon-carbon double bond. The essentiality or non-essentiality of fatty acids depends on the respective structural configuration of this terminal part of the molecule; in particular, it is related to the position of the double bonds before the carbon atom 7, beginning the count from

- 2 -

the end opposite to carboxyl, as the human body is unable to introduce the carbon-carbon double bonds before position 7. Among the four families of the above-mentioned fatty acids, linoleic acid and $\alpha$-linolenic acid are, in fact, essential to organisms, being characterized by the structural marks $C_{18}$:2 n 6 and $C_{18}$:3 n 3, respectively, where $C_{18}$ means the number of carbon atoms in the chain, ":2" and ":3" mean the number of double bonds in the chain, namely they mean respectively that 2 and 3 double bonds are present, and "n 3" and "n 6" mean the position of the first double bond, between the carbon atoms 3 and 4, and 6 and 7, respectively. It has been shown that the lack in these two acids causes in the body serious alterations in the behaviour of cell membranes and, indirectly, in the functionality of many organs, through a lacking or reduced production of prostaglandins, whose precursors are these two EFA.

As metabolic precursors, linoleic and $\alpha$-linolenic acids undergo desaturations and prolongations of their molecules, which lead to specific prostaglandins and to other biostructures having a high biological efficiency. More specifically, di-omo-$\alpha$-linolenic acid, which forms after desaturation and prolongation of the linoleic acid chain, is particularly useful, because it favours the synthesis of prostaglandins of the 1 series, having a platelet antiaggregating action, to the detriment of those of the 2 series, having a platelet aggregating activity, which originate from arachidonic acid, forms in turn in a further metabolic step from di-omo-α-linolenic acid itself. Di-omo-α-linolenic acid reduces, through the formation of the said prostaglandins of the 1 series, the risk of thrombotic phenomena and furthermore exerts a possible inhibition on biosynthesis of leukotrienes, oxigenated compounds which favour the platelet aggregation and myocardial infarction and cause damages of bronchi.

α-linolenic acid is converted to other particular long chain polyunsaturated fatty acids, which are extremely important especially for the development and functionality of brain and retina and, furthermore, have a protective effect against ischaemic coronaropathies and thrombotic diseases, in general.

Such long chain polyunsaturated fatty acids are precursors in biosynthesis of prostaglandins of the 3 series, having a strong antiaggregating action, and in inhibition of leukotrienes synthesis.

The organic lack in EFA depends on the insufficient contribution of both linoleic acid and α-linolenic acid and appears in a more or less intense way, according to its seriousness, through cardiac and circulatory alterations, immunitary deficit, fatty infiltration and liver fibrosis, deficit in the normal brain development, reproduction insufficiency, acne, skin lesions as well as water balance alterations. While, generally speaking, no problem of deficiency exists with regard to linoleic acid, being present even if in different amounts, in vegetable oils in general, the problem of deficiency exists with regard to α-linolenic acid, such an acid being contained in appreciable amounts in some vegetable oils only, which are considered to be unfit for alimentary use.

One of the oils where α-linolenic acid is contained in larger amounts is the oil ·obtained from linseed, which is used in paints and inks, and for which no alimentary utilization has been till now foreseen owing to its unpleasant taste.

The purpose of this invention is to provide a dietetic composition, which assures to the body a supplementary contribution of linoleic acid and an amount of α-linolenic acid such as to meet its organic requirements.

A further object of the invention is to provide a method for making linseed oil palatable.

More particularly, the dietetic composition of this invention contains a suitable mixture of linseed oil and soya-bean oil, in the presence of a suitable amount of an appropriate antioxidant substance, which can be chosen among butyl hydroxytoluene (BHT), butyl hydroxyanisole (BHA) and D-α-tocopherol acetate (Vitamin E acetate). In a preferred embodiment the composition according to the invention is made up of a mixture of linseed oil and soya-bean oil in equal parts and provides for the addition of suitable amounts of vitamins, such as, e.g., vitamins A and $B_6$ in a suitable form. Such vitamins, vitamin E included, are preferably added in amounts corresponding to their organic requirements. The composition according to the invention can, furthermore, include flavouring agents and/or oils characterized by a high flavour, such as first squeezed olive oil.

According to the process of the invention, selected linseeds from suitable crops are cold-squeezed, deacidified and mixed with soya-bean oil, in which an antioxidizing agent, chosen among butyl hydroxytoluene, butyl hydroxyanisole and D-$\alpha$-tocopherol acetate, as well as, optionally, suitable amounts of vitamin A and vitamin $B_6$ in their fittest forms, are added. Mixing occurs at a temperature between 7 and 28°C, preferably at 15-20°C, in the dark and in the presence of the minimum possible amount of air, in order to reduce to the utmost a possible oxidation.

In a preferred embodiment of the process according to the invention, linseeds are cold-squeezed and the raw oil obtained is immediately deacidified according to the known techniques. An equal amount of soya-bean oil of good quality is prepared and to a part of this latter vitamin E (acetate), vitamin A and vitamin $B_6$ (hydrochloride) are added in suitable amounts: the so added part of soya-bean oil is put together with the remaining part of soya-bean oil and mixed at a temperature of about 15°C, in the dark, with the raw linseed oil. Mixing occurs in a stainless steel container, previously deaerated and filled to the utmost with the oil mixture, so that this latter is in contact with as little air as possible. Flavouring agents or other different oils having high flavour can optionally be added to the mixture.

A linseed oil suitable for the dietetic composition according to the invention is a linseed oil having an α-linolenic acid titre not lower than 35% by weight and an acidity between 0,5 and 4. An α-linolenic acid titre lower than 35% by weight would make the composition unsignificant from the dietetic point of view, while an acidity higher than 4 would require too drastic neutralisations, which would, therefore, damage the product.

A soya-bean oil fit for the dietetic composition according to the invention is a soya-bean oil of good quality, practically devoid of aromatic tastes.

A suitable mixture of the dietetic composition according to the invention is made up of:

   50 l linseed oil

   50 l soya-bean oil

   100 g vitamin E acetate

15,000,000 I.U. vitamin A

   2 g vitamin $B_6$ hydrochloride

The vitamins are added to 1 l of soya-bean oil, then the soya-bean oils are put together and mixed with the linseed oil into a stainless steel container having a capacity of 110 l, previously subjected to de-aeration. Mixing is effected in the dark and at a temperature of 18°C, taking care that the ingredients fill the container to its utmost. The thus obtained mixture is divided up into doses of about 10 ml each or into doses of about 5 ml each, which are put into suitable aluminium bags having dimensions practically equal to the volume of the liquids contained in them, so that there are no upper spaces.

A package like that above described can be conveniently used, every day, to dress alimentary substances for which a dressing based on raw oils is suitable or required, as, e.g., salads, etc.

According to the age, the use as the dressing of more than one of the above-mentioned packages can be advisable.

The linseed oil of this invention, properly added with vitamins A, E and $B_6$, in a suitable form, is also fit for being contained in capsules of soft gelatin for oral administration.

CLAIMS

1. A process for the preparation of a dressing dietetic composition, able to ensure to the body the α-linolenic acid requirements, in which the normal diet is practically lacking, and to supplement the quantity of linoleic acid already existing in the normal diet, characterized in that the raw oil coming from cold-squeezing of linseed is deacidified and then mixed in the dark, at a temperature of 7 to 28°C, with soya-bean oil added with an antioxidant substance chosen among D-α-tocopherol acetate, butyl hydroxytoluene and butyl hydroxyanisole and the thus obtained oil mixture is further added with suitable amounts of vitamins A and $B_6$, and optionally with flavouring agents and vegetable oils having high flavour.

2. The process according to claim 1, characterized in that linseed oil has an α-linolenic acid content not lower than 35% by weight and an acidity between 0.5 and 4.

3. The process according to claim 2, characterized in that linseed oil and soya-bean oil are in the same amounts.

4. The process according to claims 2 and 3, characterized in that the antioxidant substance is D-α-tocopherol acetate.

5. A dressing dietetic compostion, able to ensure to the body the α-linolenic acid requirements and to supplement the supply of otherwise taken linoleic acid, characterized in that it contains proper amounts of soya-bean oil and linseed oil, and a proper amount of an antioxidant substance chosen among D-α-tocopherol acetate, butyl hydroxytoluene and butyl hydroxyanisole, as well as proper amounts of vitamin A and vitamin $B_6$ hydrochloride and, if any, flavouring substances and vegetable oils having high flavour.

6. The dressing dietetic composition according to claim 5, characterized in that linseed oil has an α-linolenic acid content not lower than 35% by weight and an acidity between 0.5 and 4.

7. The dressing dietetic composition according to claim 6, characterized in that linseed oil and soya-bean oil are in the same amounts.

8. The dressing dietetic composition according to claim 6, characterized in that the antioxidant substance is D-α-tocopherol acetate.

9. The dressing dietetic composition according to claim 8, characterized in that it contains in unit dose 5 ml raw linseed oil, 5 ml soya-bean oil, 10 mg vitamin E acetate, 1,500 I.U. vitamin A and 0.20 mg vitamin $B_6$ hydrochloride.

10. The dressing dietetic composition according to claim 8, characterized in that it contains in unit dose 2.5 ml raw linseed oil, 2.5 ml soya-bean oil, 5 mg vitamin E acetate, 750 I.U. vitamin A and 0.10 mg vitamin $B_6$ hydrochloride.